# EUROPÄISCHE PATENTSCHRIFT

(11) **EP 3 315 733 B1**
(45) Veröffentlichungstag und Bekanntmachung des Hinweises auf die Patenterteilung: **29.04.2020**
(21) Anmeldenummer: 17197918.0
(22) Anmeldetag: 24.10.2017
(51) Int. Cl.: F01D 25/16, F02C 7/20

(54) **TURBINENZWISCHENGEHÄUSE FÜR EINE GASTURBINE**
INTERMEDIATE TURBINE HOUSING FOR A GAS TURBINE
BOÎTIER INTERMÉDIAIRE DE TURBINE POUR UNE TURBINE À GAZ

(30) Priorität: 26.10.2016 DE 102016221129
(43) Veröffentlichungstag der Anmeldung: 02.05.2018
(73) Patentinhaber: MTU Aero Engines AG, 80995 München (DE)
(72) Erfinder: Klingels, Hermann, 85221 Dachau (DE)

(56) Entgegenhaltungen:
- EP-A1- 3 045 665
- EP-A2- 1 854 962
- DE-A1-102014 215 693
- US-A1- 2013 011 242

## Beschreibung

Die vorliegende Erfindung betrifft ein Turbinenzwischengehäuse für eine Gasturbine, insbesondere Fluggasturbine, mit einem Heißgas führenden, segmentierten Ringkanal, einem radialen Außengehäuse, das in einem Abstand um den Ringkanal herum angeordnet ist, einem Nabenelement, das radial innen in einem Abstand zum Ringkanal angeordnet ist, mehreren sich im Wesentlichen in Radialrichtung durch den Ringkanal hindurch erstreckenden Streben, die radial innen mit dem Nabenelement gekoppelt sind und die radial außen mit dem Außengehäuse gekoppelt sind, und mit wenigstens einem geneigt zu den Streben ausgebildeten Verbindungselement, das sich durch den Ringkanal hindurch erstreckt und radial innen mit einem Dichtungsträgerelement gekoppelt ist, wobei das Dichtungsträgerelement in Axialrichtung am Nabenelement abgestützt ist.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Ein derartiges Turbinenzwischengehäuse ist beispielsweise aus der US 2013/0011242A1 bekannt, wobei das Verbindungselement und die Streben mit dem Außengehäuse gekoppelt sind und wobei das Verbindungselement und die Streben kreuzend nebeneinander angeordnet sind. Diese Anordnung des Verbindungselements führt an mehreren eng beieinander liegenden Punkten des Außengehäuses zu Kraftübertragungen, was das Auftreten von Spannungen im Außengehäuse zur Folge hat. Da sich die Strebe und das Stützelement im Bereich des Ringkanals kreuzen, muss die Verkleidung dort groß dimensioniert bzw. sehr "dick" ausgeführt werden. Dies bedeutet ein großes Hindernis bzw. eine große Versperrung für die Gasströmung, so dass entsprechend Verluste auftreten, insbesondere auch im Hinblick auf den Gesamtwirkungsgrad der Turbine.

Weitere Gasturbinengehäuse sind aus den Dokumenten US20130011242A1, EP1854962A2 und EP3045665A1 bekannt.

Aufgabe der Erfindung ist es, ein Turbinenzwischengehäuse bereitzustellen, bei dem die obigen Nachteile vermieden werden können.

Zur Lösung dieser Aufgabe wird ein Turbinenzwischengehäuse nach Anspruch 1 vorgeschlagen, bei dem wenigstens ein Verbindungselement radial außen an eine Strebe abgestützt ist, derart dass ein Dichtungsträger durch das wenigstens eine Verbindungselement an der Strebe abgestützt ist. Durch diese Abstützung an der Strebe kann auf eine weitere Krafteinleitung im Bereich des Außengehäuses verzichtet werden. Entsprechend können Spannungen im Außengehäuse reduziert werden. Schließlich ist auch der Aufbau des Außengehäuses vereinfacht verglichen mit einem bekannten Außengehäuse, an dem das Verbindungselement abgestützt ist. In Bezug auf die relative Lage des Verbindungselements zu der betreffenden Strebe ist anzumerken, dass sich die Streben im Wesentlichen in radialer Richtung erstrecken und keine oder nur eine kleine Richtungskomponente in Axialrichtung aufweisen. Das Verbindungselement erstreckt sich in Radialrichtung und Axialrichtung. Bezogen auf die Radialrichtung kann das Verbindungselement unter einem Winkel von etwa 30° bis 60°, vorzugsweise etwa 40° bis 50° angeordnet sein.

Weiterbildend wird vorgeschlagen, dass ein radial äußeres Ende des Verbindungselements vom Außengehäuse abgedeckt ist. Anders ausgedrückt befindet sich das radial äußere Ende des Verbindungselements radial innerhalb des Außengehäuses. Das Verbindungselement ist somit von außen nicht sichtbar.

Hierzu wird weiter vorgeschlagen, dass die betreffende Strebe einen Aufnahmeabschnitt aufweist, in dem das radial äußere Ende des Verbindungselements aufgenommen und abgestützt ist. Der Aufnahmeabschnitt kann eine Art hohle Verdickung der Strebe sein, durch die das Verbindungselement hindurch geführt ist. An einem radial äußeren Bereich kann der Aufnahmeabschnitt einen Lagerabschnitt aufweisen, an dem das Verbindungselement an der Strebe abgestützt ist.

Damit insbesondere im Bereich des Ringkanals der Strömungsquerschnitt nicht übermäßig verkleinert wird, können das Verbindungselement und die betreffende Strebe in Axialrichtung fluchtend zueinander angeordnet sein. Das Verbindungselement und die betreffende Strebe bilden somit in Axialrichtung eine Art V-Form. Wenn das Verbindungselement und die betreffende Strebe in Axialrichtung fluchtend zueinander angeordnet sind, bilden Sie im Ringkanal in Strömungsrichtung hintereinander angeordnete Elemente, die einfach mit einer gemeinsamen Ummantelung versehen werden können.

Das Verbindungselement kann radial innen wenigstens einen Kopplungsabschnitt aufweisen, der mit dem Dichtungsträgerelement gekoppelt ist. Der Kopplungsabschnitt kann dabei insbesondere als mittels einer Schraubverbindung, insbesondere auch Schrauben-Mutter-Verbindung mit dem Dichtungsträgerelement verbunden sein.

Hierzu wird weiterbildend vorgeschlagen, dass das Verbindungselement zwei Kopplungsabschnitte aufweist, die geneigt zueinander ausgebildet sind, vorzugsweise derart, dass das Verbindungselement im Wesentlichen Y-förmig ausgebildet ist. Dabei können die zwei Kopplungsabschnitte entlang der Umfangsrichtung an unterschiedlichen Kopplungsstellen mit dem Dichtungsträger gekoppelt sein. Mittels eines Verbindungselements, das zwei Kopplungsabschnitte aufweist, können auf das Dichtungsträgerelement wirkende Kräfte spannungsarm übertragen werden.

Das Verbindungselement kann an seinem radial äußeren Ende eine Spannvorrichtung aufweisen, durch die eine auf das Verbindungselement wirkende Vorspannkraft, insbesondere Zugkraft, einstellbar ist. Eine solche Spannvorrichtung kann beispielsweise durch eine Mutter gebildet sein, die auf ein am Verbindungselement vorgesehene Außengewinde geschraubt ist. Die Mutter kann dabei mit ihren Rändern am oben bereits erwähnten Lagerabschnitt des Aufnahmeabschnitts der Strebe anliegen.

Das Verbindungselement und die betreffende Strebe können im Bereich des Ringkanals in einer gemeinsamen Ummantelung aufgenommen sein, die an einem betreffenden Ringkanalsegment ausgebildet ist. Ein solches Ringkanalsegment, das eine Ummantelung für die Strebe und das Verbindungselement aufweist, wird im Fachjargon auch als Fairing bezeichnet.

Die Erfindung betriff ferner auch eine Gasturbine, insbesondere Fluggasturbine mit einer ersten Turbine und wenigstens einer weiteren Turbine wobei zwischen der ersten Turbine und der weiteren Turbine ein oben beschriebenes Turbinenzwischengehäuse angeordnet ist.

Nachfolgend wird die Erfindung unter Bezugnahme auf die anliegenden Figuren beispielhaft und nicht einschränkend beschrieben.
Fig. 1 zeigt eine vereinfachte und schematische Schnittansicht einer Ausführungsform eines Turbinenzwischengehäuses und teilweise einer Niederdruckturbine und einer Hochdruckturbine.
Fig. 2 zeigt in den Teilfiguren A) und B) zwei Ausführungsformen eines Verbindungselements in einer Schnittansicht entsprechend der Schnittlinie II-II der Fig. 1

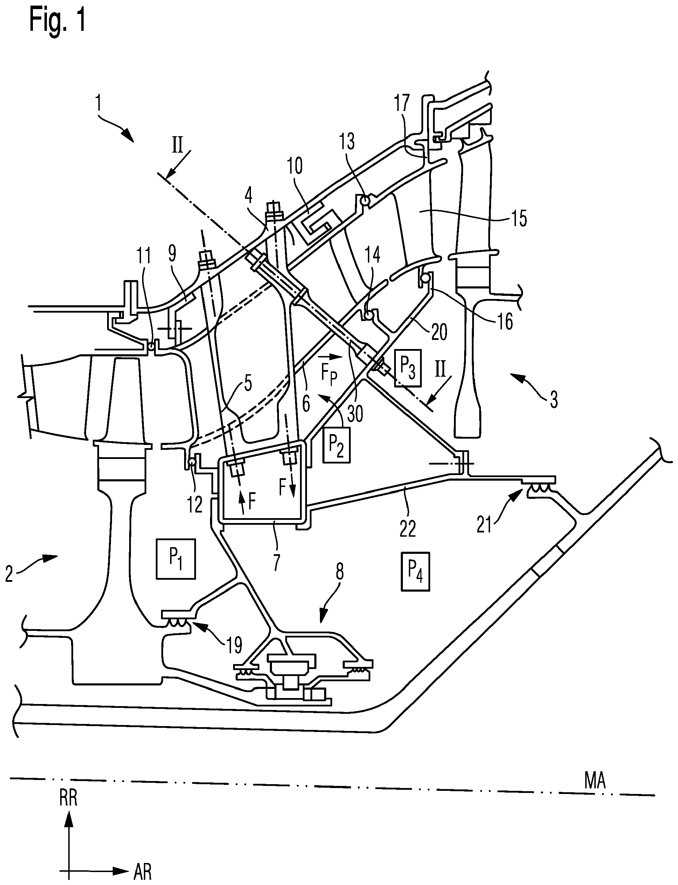

Fig. 1 zeigt ein Turbinenzwischengehäuse 1 einer Gasturbine mit einer entlang der Axialrichtung AR stromaufwärtigen Hochdruckturbine 2 (erste Turbine) und einer stromabwärtigen Niederdruckturbine 3 (weitere Turbine). Das Turbinenzwischengehäuse weist ein Außengehäuse 4 auf, das einen Heißgas führenden, segmentierten Ringkanal 6 umgibt.Mit MA ist eine Maschinenachse der Gasturbine bezeichnet.

Radial innen ist ein Nabenelement 7 vorgesehen. Das Nabenelement 7 und das Außengehäuse 4 sind konzentrisch zur Maschinenachse MA der Gasturbine angeordnet. Das Nabenelement 7 ist mittels mehrerer Streben 5 mit dem Außengehäuse 4 verbunden. Die Streben 5 erstrecken sich dabei durch den Heißgas führenden Ringkanal 6 hindurch.

Der Ringkanal 6 ist insbesondere durch Ringkanalsegmente gebildet, die mittels einer vorderen Strömungskanalaufhängung 9 und einer hinteren Strömungskanalaufhängung 10 mit dem Außengehäuse 4 verbunden sind.

Durch verschiedene Dichtungen 11, 12, 13 und 14 wird eine Sperrluftkammer gebildet in die Sperrluft mit höherem Druck verglichen mit dem Druck im Ringkanal 6 eingebracht wird. Hierdurch wird gewährleistet, dass die Strukturteile und Versorgungsleitungen einer Lagerkammer 8 nicht mit Heißgas in Berührung kommen.

Axial hinten ist vor dem Übergang in die Niederdruckturbine 3 ein Leitgitter 15 vorgesehen. Das Leitgitter 15 ist mittels Leitgitterhaken 17 an dem Außengehäuse 4 fixiert. Einen radial innen vorgesehene Leitgitterdichtung 16 verhindert ein Umströmen von Heißgas um das Leitgitter 15.

Im gezeigten Beispiel ist das Nabenelement 7 als insbesondere kastenförmiger Ring ausgeführt. Das kastenförmige Nabenelement 7 weist entsprechend eine hohe Torsionssteifigkeit auf. An dem Nabenelement 7 ist die Lagerkammer 8 mit einem Dichtungsträger für eine Wellendichtung 19 angebracht. Ferner ist am Nabenelement 7 ein (Leitschaufel-)Dichtungsträgerelement 20 angeordnet. Mit 22 ist ein Wellendichtungsträger bezeichnet, der auch mit dem Nabenelement 7 verbunden ist.

Die oben genannten Bauteile sind mit unterschiedlichen Drücken beaufschlagt, die in der Fig. 1 mit P1 bis P4 (eingerahmt) angedeutet sind, wobei P1 > P2 > P3 > P4 ist. Die auf die Bauteile wirkenden Drücke verursachen resultierende Kräfte (mit Fp gekennzeichnet) in axialer Richtung AR, die auf das Nabenelement 7 übertragen werden. Von dort werden die Kräfte über die Streben 5 in das Außengehäuse 4 geleitet. An den Übergängen bzw. Verbindungen zwischen dem Nabenelement 7 und den Streben 5 entstehen deshalb hohe Kräfte (mit F gekennzeichnet). Diese können bei zyklischer Beanspruchung in ihrer Lebensdauer beschränkt sein.

Der Dichtungsträger 20 weist insbesondere in Axialrichtung AR und in Radialrichtung RR eine große Erstreckung auf. Dies führt zu einer großen Fläche auf der insbesondere die Druckdifferenz zwischen P2 und P3 wirkt. Um große Spannungen und Verformungen an dem Dichtungsträger 20 zu vermeiden, wird der Dichtungsträger 20 neben seiner Anbringung am Nabenelement 7 auch mittels eines Verbindungselements 30 abgestützt. Dabei erfolgt die Abstützung des Dichtungsträgers 20 durch Verbindungselemente 30, die an einer jeweiligen (betreffenden) Strebe 5 abgestützt sind. Es ist klar, dass in Umfangrichtung mehrere Verbindungselement 30 verteilt angeordnet sind, um den gesamten Dichtungsträger 20 wirkungsvoll abzustützen. Durch das Verbindungselement 30 wird ein Teil der Kräfte nicht über die Nabe 7 zu den Streben 5 geleitet, sondern auf direktem Weg über die Streben 5 in das Außengehäuse 4. Somit kann die Verbindungsstelle der Streben 5 zur Nabe 7 entlastet und damit deren Lebensdauer verlängert werden. Zudem können die betroffenen Bauteile, insbesondere der Dichtungsträger 20, weniger massiv, insbesondere leichter ausgeführt werden.

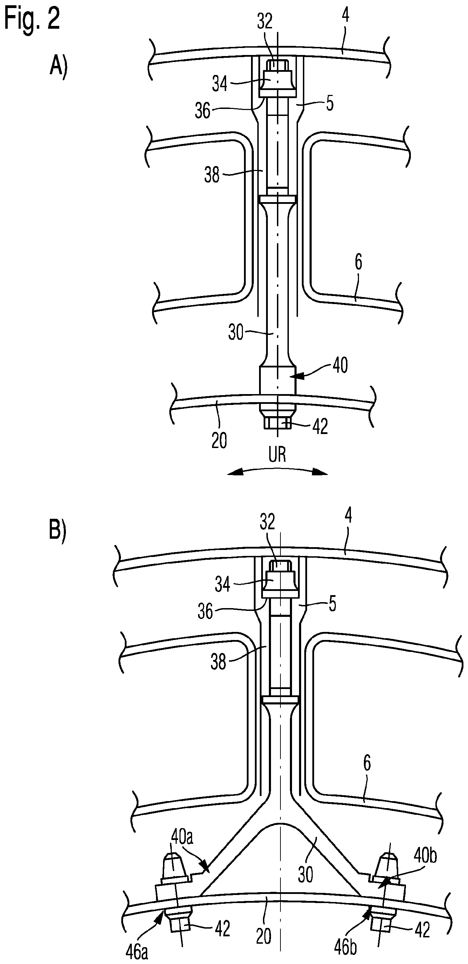

Fig. 2A) zeigt in einer Schnittdarstellung entsprechend der Schnittlinie II-II der Fig. 1 eine erste Ausführungsform des Verbindungselements 30. Das Verbindungselement 30 ist als Zugstab ausgeführt. Das Verbindungselement 30 weist radial außen einen Gewindeabschnitt 32 auf, der mit einer Mutter 34 verbunden ist. Die Mutter 34 liegt mit ihrem radialen Innenrand auf einem Lagerabschnitt 36 auf, der in in einem Aufnahmeabschnitt 38 der Strebe 5 ausgebildet ist. Mittels der Mutter 34 kann eine auf das Verbindungselement 30 wirkende Vorspannkraft, insbesondere Zugkraft, eingestellt werden. Die Schrauben-Mutter-Verbindung 32, 34 bildet also eine Art Spannvorrichtung für das Verbindungselement 30.

An seinem radial inneren Ende weist das Verbindungselement einen Kopplungsabschnitt 40 auf. Der Kopplungsabschnitt 40 umfasst ebenfalls einen nicht sichtbaren Gewindeabschnitt, der mit einer Mutter 42 verbunden ist. Hierducht ist der Kopplungsabschnitt 40 mit dem Dichtungsträger 20 gekoppelt.

Eine alternative Ausführungsform des Verbindungselements 30 ist in der Fig. 2B) dargestellt. Radial außen ist das Verbindungselement 30 gleich ausgestaltet, wie dies in Bezug auf die Fig. 2A) bereits beschrieben worden ist. Radial innen bzw. an seinem radial inneren Ende weist das Verbindungselement 30 zwei Kopplungsabschnitte 40a, 40b auf. Die beiden Kopplungsabschnitte 40a, 40b sind zueinander geneigt ausgeführt. Entsprechend erfolgt die Kopplung des Verbindungselements 30 am Dichtungsträger 20 an zwei in Umfangsrichtung UR voneinander beabstandeten Stellen 46a, 46b. Anders ausgedrückt ist das Verbindungselement 30 im Bereich unterhalb (radial innen) des Ringkanals 6 gabelförmig oder V-förmig erweitert. Das Verbindungselement 30 mit zwei Kopplungsabschnitten 40a, 40b ermöglicht es, die Krafteinleitung zum Dichtungsträger aufgrund der erhöhten Anzahl von Verbindungstellen 46a, 46b gleichmäßiger zu gestalten, um lokale Spannungsspitzen im Dichtungsträger 20 zu vermeiden.

Insgesamt ergibt sich ein Turbinenzwischengehäuse, das insbesondere bei Gasturbinen mit mehreren Wellen eingesetzt werden kann, insbesondere zwischen einzelnen Turbinen angeordnet werden kann, wie etwa Niederdruckturbine und Hochdruckturbine oder Niederdruckturbine und Mitteldruckturbine oder Hochdruckturbine und Mitteldruckturbine. Das vorgeschlagenen Verbindungselement ermöglicht durch seine Abstützung an einer betreffenden Strebe eine bezogen auf das Außengehäuse spannungsarme Kraftübertragung. Ferner stellen die betreffende Strebe und das zugehörige Verbindungselement im Ringkanal kein unnötig vergrößertes Hindernis dar, weil sie in Axialrichtung bzw. Hauptströmungsrichtung fluchtend zueinander angeordnet sind.

### Bezugszeichenliste

- 1: Turbinenzwischengehäuse
- 2: Hochdruckturbine
- 3: Niederdruckturbine
- 4: Außengehäuse
- 5: Strebe
- 6: Ringkanalsegmente
- 7: Nabenelement
- 8: Lagerkammer
- 9: vordere Gaskanalaufhängung
- 10: hintere Gaskanalaufhängung
- 11: Dichtung
- 12: Dichtung
- 13: Dichtung
- 14: Dichtung
- 15: Leitgitter
- 16: Leitgitterdichtung
- 17: Leitgitterhaken
- 19: vordere Wellendichtung
- 20: (Leitschaufel-) Dichtungsträgerelement
- 21: hintere Wellendichtung
- 22: Wellendichtungsträger
- 30: Verbindungselement
- 32: Gewindeabschnitt
- 34: Mutter
- 36: Lagerabschnitt
- 38: Aufnahmeabschnitt
- 40, 40a, 40b: Kopplungsabschnitt
- 42: Mutter
- 46a, 46b: Befestigungsstelle Kopplungsabschnitt

## Patentansprüche

1. Turbinenzwischengehäuse für eine Gasturbine, insbesondere Fluggasturbine, mit einem Heißgas führenden, segmentierten Ringkanal (6),
einem radialen Außengehäuse (4), das in einem Abstand um den Ringkanal (6) herum angeordnet ist,
einem Nabenelement (7), das radial innen in einem Abstand zum Ringkanal (6) angeordnet ist,
mehreren sich im Wesentlichen in Radialrichtung (RR) durch den Ringkanal (6) hindurch erstreckenden Streben (5), die radial innen mit dem Nabenelement (7) gekoppelt sind und die radial außen mit dem Außengehäuse (4) gekoppelt sind, und
mit wenigstens einem geneigt zu den Streben (5) ausgebildeten Verbindungselement (30), das sich durch den Ringkanal (6) hindurch erstreckt und radial innen mit einem Dichtungsträgerelement (20) gekoppelt ist, wobei das Dichtungsträgerelement (20) in Axialrichtung (AR) am Nabenelement (7) abgestützt ist,
**dadurch gekennzeichnet, dass**
das wenigstens eine Verbindungselement (30) radial außen an einer der Streben (5) abgestützt ist, derart dass der Dichtungsträger (20) durch das wenigstens eine Verbindungselement (30) an der betreffenden Strebe (5) abgestützt ist.

2. Turbinenzwischengehäuse nach Anspruch 1, **dadurch gekennzeichnet, dass** ein radial äußeres Ende des Verbindungselements (30) vom Außengehäuse (4) abgedeckt ist.

3. Turbinenzwischengehäuse nach Anspruch 2, **dadurch gekennzeichnet, dass** die betreffende Strebe (5) einen Aufnahmeabschnitt (38) aufweist, in dem das radial äußere Ende des Verbindungselements (30) aufgenommen und abgestützt ist.

4. Turbinenzwischengehäuse nach einem der vorhergehenden Ansprüche, **dadurch gekennzeichnet, dass** das Verbindungselement (30) und die betreffende Strebe (5) in Axialrichtung (AR) fluchtend zueinander angeordnet sind.

5. Turbinenzwischengehäuse nach einem der vorhergehenden Ansprüche, **dadurch gekennzeichnet, dass** das Verbindungselement (30) radial innen wenigstens einen Kopplungsabschnitt (40, 40a, 40b) aufweist, der mit dem Dichtungsträgerelement (20) gekoppelt ist.

6. Turbinenzwischengehäuse nach Anspruch 5, **dadurch gekennzeichnet, dass** das Verbindungselement (30) zwei Kopplungsabschnitte (40a, 40b) aufweist, die geneigt zueinander ausgebildet sind, vorzugsweise derart, dass das Verbindungselement (30) im Wesentlichen Y-förmig ausgebildet ist.

7. Turbinenzwischengehäuse nach Anspruch 6, **dadurch gekennzeichnet, dass** die zwei Kopplungsabschnitte (40a, 40b) entlang der Umfangsrichtung (UR) an unterschiedlichen Kopplungsstellen (46a, 46b) mit dem Dichtungsträger (20) gekoppelt sind.

8. Turbinenzwischengehäuse nach einem der vorhergehenden Ansprüche, **dadurch gekennzeichnet, dass** das Verbindungselement (30) an seinem radial äußeren Ende eine Spannvorrichtung (32, 34) aufweist, durch die eine auf das Verbindungselement (30) wirkende Vorspannkraft, insbesondere Zugkraft, einstellbar ist.

9. Turbinenzwischengehäuse nach einem der vorhergehenden Ansprüche, **dadurch gekennzeichnet, dass** das Verbindungselement (30) und die betreffende Strebe (5) im Bereich des Ringkanals (6) in einer gemeinsamen Ummantelung aufgenommen sind, die an einem betreffenden Ringkanalsegment ausgebildet ist.

10. Gasturbine, insbesondere Fluggasturbine mit ersten Turbine und wenigstens einer weiteren Turbine, **dadurch gekennzeichnet, dass** zwischen der ersten Turbine und der weiteren Turbine ein Turbinenzwischengehäuse nach einem der vorhergehenden Ansprüche angeordnet ist.

## Claims

1. An intermediate turbine housing for a gas turbine, in particular an aircraft gas turbine, comprising a hot gas-conveying, segmented annular channel (6), a radial outer housing (4) arranged at a distance around the annular channel (6), a hub element (7) arranged radially inside at a distance from the annular channel (6), a plurality of struts (5) extending substantially in the radial direction (RR) through the annular channel (6), which are coupled radially inside to the hub element (7), and which are coupled radially outside to the outer housing (4), and comprising at least one connecting element (30) formed so as to be inclined with respect to the struts (5), which extends through the annular channel (6), and which is coupled radially inside to a seal support element (20), the seal support element (20) being supported on the hub element (7) in the axial direction (AR), **characterized in that** the at least one connecting element (30) is supported radially outside on one of the struts (5), such that the seal support (20) is supported on the relevant strut (5) by the at least one connecting element (30).

2. The intermediate turbine housing according to claim 1, **characterized in that** a radially outer end of the connecting element (30) is covered by the outer housing (4).

3. The intermediate turbine housing according to claim 2, **characterized in that** the relevant strut (5) has a receiving portion (38) in which the radially outer end of the connecting element (30) is received and supported.

4. The intermediate turbine housing according to any of the preceding claims, **characterized in that** the connecting element (30) and the relevant strut (5) are arranged in alignment with one another in the axial direction (AR).

5. The intermediate turbine housing according to any of the preceding claims, **characterized in that** the connecting element (30) has at least one radially inner coupling portion (40, 40a, 40b) which is coupled to the seal support element (20).

6. The intermediate turbine housing according to claim 5, **characterized in that** the connecting element (30) has two coupling portions (40a, 40b) which are formed so as to be inclined with respect to one another, preferably such that the connecting element (30) is substantially Y-shaped.

7. The intermediate turbine housing according to claim 6, **characterized in that** the two coupling portions (40a, 40b) are coupled to the seal support (20) at different coupling points (46a, 46b) along the circumferential direction (UR).

8. The intermediate turbine housing according to any of the preceding claims, **characterized in that** the connecting element (30) has a tensioning device (32, 34) at the radially outer end thereof, by means of which a prestressing force, in particular a tensile force, acting on the connecting element (30) can be adjusted.

9. The intermediate turbine housing according to any of the preceding claims, **characterized in that**, in the region of the annular channel (6), the connecting element (30) and the relevant strut (5) are received in a common casing which is formed on a relevant annular channel segment.

10. A gas turbine, in particular an aircraft gas turbine comprising a first turbine and at least one further turbine, **characterized in that** an intermediate turbine housing according to any of the preceding claims is arranged between the first turbine and the further turbine.

## Revendications

1. Carter intermédiaire de turbine pour une turbine à gaz, en particulier pour une turbine à gaz d'aéronef, comportant un canal annulaire (6) segmenté à travers lequel passe un gaz chaud,
un carter extérieur radial (4) qui est disposé à distance autour du canal annulaire (6),
un élément de moyeu (7) qui est disposé radialement à l'intérieur à distance du canal annulaire (6),
une pluralité d'entretoises (5) qui s'étendent essentiellement dans la direction radiale (RR) à travers le canal annulaire (6) et qui sont accouplées radialement à l'intérieur à l'élément de moyeu (7) et radialement à l'extérieur au carter extérieur (4), et
au moins un élément de liaison (30) formé de façon inclinée par rapport aux entretoises (5), lequel s'étend à travers le canal annulaire (6) et est accouplé radialement à l'intérieur à un élément de porte-joint (20), l'élément de porte-joint (20) étant supporté sur l'élément de moyeu (7) dans la direction axiale (AR),
**caractérisé en ce que**
l'au moins un élément de liaison (30) est supporté sur l'une des entretoises (5) radialement vers l'extérieur, de telle sorte que le porte-joint (20) est supporté sur l'entretoise correspondante (5) par l'intermédiaire de l'au moins un élément de liaison (30).

2. Carter intermédiaire de turbine selon la revendication 1, **caractérisé en ce qu'**une extrémité radialement extérieure de l'élément de liaison (30) est recouverte par le carter extérieur (4).

3. Carter intermédiaire de turbine selon la revendication 2, **caractérisé en ce que** l'entretoise correspondante (5) présente une section de logement (38) dans laquelle l'extrémité radialement extérieure de l'élément de liaison (30) est logée et en appui.

4. Carter intermédiaire de turbine selon l'une des revendications précédentes, **caractérisé en ce que** l'élément de liaison (30) et l'entretoise correspondante (5) sont disposés en alignement l'un avec l'autre dans la direction axiale (AR).

5. Carter intermédiaire de turbine selon l'une des revendications précédentes, **caractérisé en ce que** l'élément de liaison (30) présente au moins une section d'accouplement (40, 40a, 40b) radialement à l'intérieur, laquelle est accouplée à l'élément porte-joint (20).

6. Carter intermédiaire de turbine selon la revendication 5, **caractérisé en ce que** l'élément de liaison (30) présente deux sections d'accouplement (40a, 40b) qui sont formées de manière à être inclinées l'une par rapport à l'autre, de préférence de façon à ce que l'élément de liaison (30) soit sensiblement en forme de Y.

7. Carter intermédiaire de turbine selon la revendication 6, **caractérisé en ce que** les deux sections d'accouplement (40a, 40b) sont accouplées au porte-joint (20) le long de la direction circonférentielle (UR) à différents points d'accouplement (46a, 46b).

8. Carter intermédiaire de turbine selon l'une des revendications précédentes, **caractérisé en ce que** l'élément de liaison (30) présente, à son extrémité radialement extérieure, un dispositif de serrage (32, 34) permettant de régler une force de précontrainte, notamment une force de traction, agissant sur l'élément de liaison (30).

9. Carter intermédiaire de turbine selon l'une des revendications précédentes, **caractérisé en ce que** l'élément de liaison (30) et l'entretoise correspondante (5) sont logés dans la région du canal annulaire (6) dans une gaine commune qui est formée sur un segment de canal annulaire correspondant.

10. Turbine à gaz, en particulier turbine à gaz d'aéronef, comportant une première turbine et au moins une autre turbine, **caractérisée en ce qu'**un carter intermédiaire de turbine selon l'une des revendications précédentes est disposé entre la première turbine et l'autre turbine.
